# EUROPÄISCHE PATENTSCHRIFT

(11) **EP 4 413 275 B1**
(45) Veröffentlichungstag und Bekanntmachung des Hinweises auf die Patenterteilung: **08.10.2025**
(21) Anmeldenummer: 22757485.2
(22) Anmeldetag: 10.08.2022
(51) Int. Cl.: F16C 29/06, F16C 33/66

(54) **FÜHRUNGSWAGEN EINER LINEARFÜHRUNG**
CARRIAGE OF A LINEAR BEARING
CHARIOT DE GUIDAGE LINEAIRE

(30) Priorität: 04.10.2021 DE 102021125612
(43) Veröffentlichungstag der Anmeldung: 14.08.2024
(73) Patentinhaber: Schaeffler Technologies AG & Co. KG, 91074 Herzogenaurach (DE)
(72) Erfinder: MENGES, Martin, 66424 Homburg (DE)
(86) Internationale Anmeldenummer: PCT/DE2022/100586
(87) Internationale Veröffentlichungsnummer: WO 2023/057001

(56) Entgegenhaltungen:
- JP-A- 2008 002 490
- US-A1- 2004 234 176
- US-A1- 2015 219 160

## Beschreibung

Die vorliegende Erfindung betrifft einen Führungswagen einer Linearführung, insbesondere einer Profilschienenwälzführung.

Aus DE10126439 A1 ist ein Führungswagen nach den Merkmalen des Oberbegriffs des Anspruchs 1 bekannt geworden. Die Kopfstücke des Führungswagens weisen jeweils mehrere Schmierstoffanschlüsse auf die an einen gemeinsamen Schmierstoffkanal für die Zuführung von Schmierstoff angeschlossen sind. Mehrere in Fließrichtung des Schmierstoffs hintereinander in Reihe geschaltete Ordnungen von Schmierstoffkanälen sind vorgesehen, wobei jedem Schmierstoffkanal einer höherrangigen Ordnung eine Mehrzahl von untereinander parallel geschalteten Schmierstoffkanälen einer niederrangigen Ordnung von Schmierstoffkanälen zugeordnet ist.

Aufgabe der Erfindung war es, einen derartigen Führungswagen mit einer weiter verbesserten Schmiereinrichtung vorzuschlagen. Erfindungsgemäß wurde diese Aufgabe durch den Führungswagen gemäß Anspruch 1 gelöst.

Der Führungswagen weist endlose Wälzkörperkanäle auf, in denen Wälzkörper endlos umlaufen.

Jeder Wälzkörperkanal kann einen Lastabschnitt, einen Rücklaufabschnitt sowie den Lastabschnitt mit dem Rücklaufabschnitt endlos verbindende Umlenkabschnitte aufweisen, wobei die Lastabschnitte Laufbahnen für die Wälzkörper aufweisen können. Der Führungswagen kann einen Tragkörper aufweisen sowie an beiden Stirnseiten des Tragkörpers angeordnete Kopfstücke. In den Kopfstücken sind vorzugsweise die genannten Umlenkabschnitte für die Wälzkörper untergebracht. Die Kopfstücke können mehreilig ausgeführt sein.

Der Führungswagen weist vorzugsweise einen Rücken auf, an dessen beiden Längsseiten zueinander parallel angeordnete Schenkel angeordnet sind. Die Laufbahnen des Lastabschnitts sind vorzugsweise an einander zugewandten Seiten von Schenkeln des u-förmigen Führungswagens an dessen Tragkörper ausgebildet. Dieser Führungswagen hat ein etwa u-förmiges Querschnittsprofil und kann eine Profilschiene einer Profilschienenwälzführung umgreifen

Wenigstens eines der Kopfstücke weist vorzugsweise einen externen Schmierstoffanschluß für die Zuführung von Schmierstoff auf. Das kann ein Schmiernippel sein oder ein Schraubventil.

Dieses Kopfstück kann in günstiger Weise Schmierstoffkanäle für den Schmierstoff aufweisen, die an die Wälzkörperkanäle zu deren Versorgung mit Schmierstoff angeschlossen sind.

Es sind mehrere in Fließrichtung des Schmierstoffs hintereinander in Reihe geschaltete Ordnungen von Schmierstoffkanälen vorgesehen. Jedem Schmierstoffkanal einer höherrangigen Ordnung ist eine Mehrzahl von untereinander parallel geschalteten Schmierstoffkanälen einer niederrangigen Ordnung von Schmierstoffkanälen zugeordnet. Mehrere niederrangige Schmierstoffkanäle sind parallel an den höherrangigen Schmierstoffkanal angeschlossen, so dass der Schmierstoffstrom des höherrangigen Schmierstoffkanals sich aufteilt auf die Anzahl der angeschlossenen niederrangigen Schmierstoffkanäle. Der erste Schmierstoffkanal ist der ordnungsmäßig ranghöchste Schmierstoffkanal, der an den Schmierstoffanschluss angeschlossen ist.

Die Summe der Fließquerschnitte dieser - an den höherrangigen Schmierstoffkanal - angeschlossenen Schmierstoffkanäle der niederrangigen Ordnung ist gleich groß wie der Fließquerschnitt des Schmierstoffkanals der höherrangigen Ordnung. Der Fließquerschnitt ist gegeben durch die lichte Querschnittsfläche des Schmierstoffkanals, begrenzt durch seine Kanalwand. Die Fließquerschnitte der niederrangigen Ordnung sind innerhalb ihrer Ordnung vorzugsweise gleich groß. Die Fließgeschwindigkeiten des Schmierstoffs können auf diese Weise weitgehend konstant gehalten werden in allen Schmierstoffkanälen. Die Fließquerschnitte und die Anzahl der niederrangigen Schmierstoffkanäle sind auf den Fließquerschnitt des angeschlossenen höherrangigen Schmierstoffkanals abgestimmt.

Vorzugsweise ist ein Schmierstoffkanal erster Ordnung vorgesehen, der sich von dem Schmierstoffanschluss bis zu einem ersten Verteilerpunkt erstreckt, an den Schmierstoffkanäle zweiter Ordnung angeschlossen sind, die sich jeweils bis zu einem zweiten Verteilerpunkt erstrecken, an den jeweils Schmierstoffkanäle dritter Ordnung angeschlossen sind, die sich jeweils bis zu einem Übergabeabschnitt erstrecken, die den Schmierstoffkanal dritter Ordnung mit einem der Wälzkörperkanäle verbindet.

Idealerweise ist die Summe der Volumen der niederrangigen Kanäle gleich dem Volumen des angeschlossenen höherrangigen Kanals. Diese Maßnahme kann zweckmäßig sein, um bei einem Schmierimpuls zu erreichen, dass das aus dem höherrangigen Schmierstoffkanal vollständig verdrängte Volumen ebenso vollständig aus den angeschlossenen niederrangigen Schmierstoffkanälen verdrängt wird.

Das Kopfstück kann mehrere Schmierstoffanschlüsse aufweisen, die an den gemeinsamen Schmierstoffkanal der ersten Ordnung anschließen.

Der Schmierstoffkanal der ersten Ordnung kann sich quer zur Längsachse von einer Längsseite des Führungswagens zu der gegenüberliegenden Längsseite erstrecken und an beiden Enden an je einen der Schmierstoffanschlüsse angeschlossen sein, wobei in diesem Fall mittig zwischen den beiden Schmierstoffanschlüssen der erste Verteilerpunkt angeordnet ist.

Zwei Schmierstoffkanäle zweiter Ordnung können sich ausgehend von dem ersten Verteilerpunkt jeweils in einen der beiden Schenkel des Führungswagens hinein erstrecken bis zu einem zweiten Verteilerpunkt, an den jeweils zwei Schmierstoffkanäle dritter Ordnung anschließen.

Beide Schmierstoffkanäle dritter Ordnung können ausgehend von dem zweiten Verteilerpunkt entlang einer gemeinsamen Achse quer zu dem Schmierstoffkanal erster Ordnung angeordnet sein und jeweils an einem Übergabeabschnitt eines Wälzkörperkanals enden. Der Übergabebschnitt verbindet die Schmierstoffkanäle hydraulisch mit dem Wälzkörperkanal. Der Übergabeabschnitt kann als Einwegeventil ausgebildet sein, das Schmierstoff lediglich in einer Richtung passieren lässt, in Richtung auf den Wälzkörperkanal.

Die Schmierstoffkanäle sind miteinander verbunden in dem Sinn, dass Schmierstoff an den Übergabestellen von einem in andere Schmierstoffkanäle fließen kann. Ein Schmierstoffanschluss ist in dem Sinn mit dem Schmierstoffkanal verbunden, dass Schmierstoff über den Schmierstoffanschluss von außen in den anschließenden Schmierstoffkanal gefördert werden kann.

Die Fließquerschnitte innerhalb einer Ordnung von Schmierstoffkanälen sind vorzugsweise jeweils konstant. Auf diese Weise kann eine gleichmäßige Versorgung der Schmierstoffkanäle mit Schmierstoff unterstützt werden.

Nachstehend wird die Erfindung anhand eines in insgesamt vier Figuren abgebildeten Ausführungsbeispieles näher erläutert. Es zeigen:
- Figur 1: eine Profilschienenwälzführung mit Führungsschiene und Führungswagen in perspektivischer Darstellung,
- Figur 2: den Führungswagen aus Figur 1 und
- Figur 3: eine Einzelheit des Führungswagens aus Figur 2 in perspektivischer Darstellung und
- Figur 4: ein Detail aus Figur 1 in einem Längsschnitt.

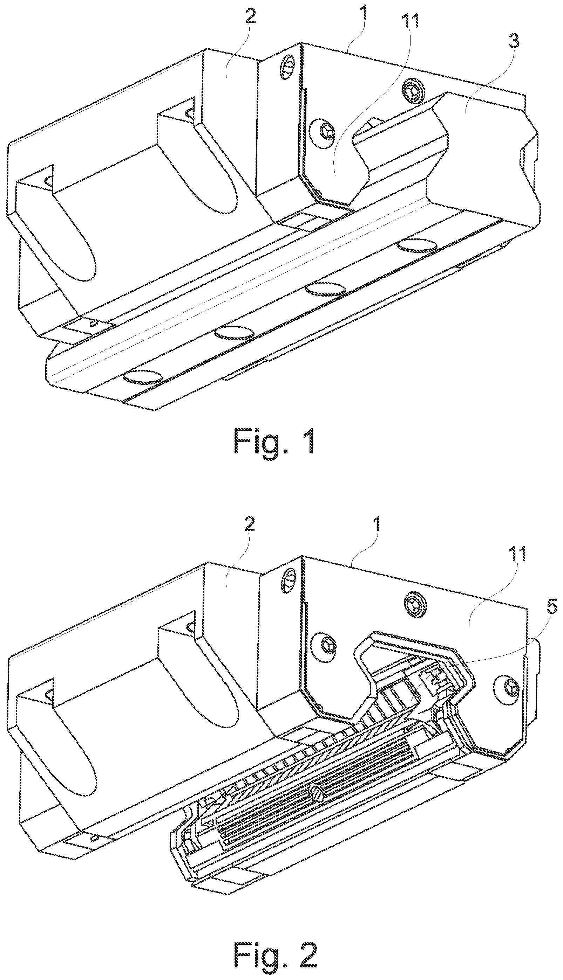

Die Figuren 1 bis 4 zeigen eine Profilschienenwälzführung mit Führungsschiene und Führungswagen in perspektivischer Darstellung. Diese Profilschienenwälzführung ist eine Linearführung.

Der Führungswagen weist einen Rücken 1 auf, an dessen beiden Längsseiten zueinander parallel angeordnete Schenkel 2 angeordnet sind. Dieser Führungswagen hat ein etwa u-förmiges Querschnittsprofil und umgreift eine Profilschiene 3 der Profilschienenwälzführung.

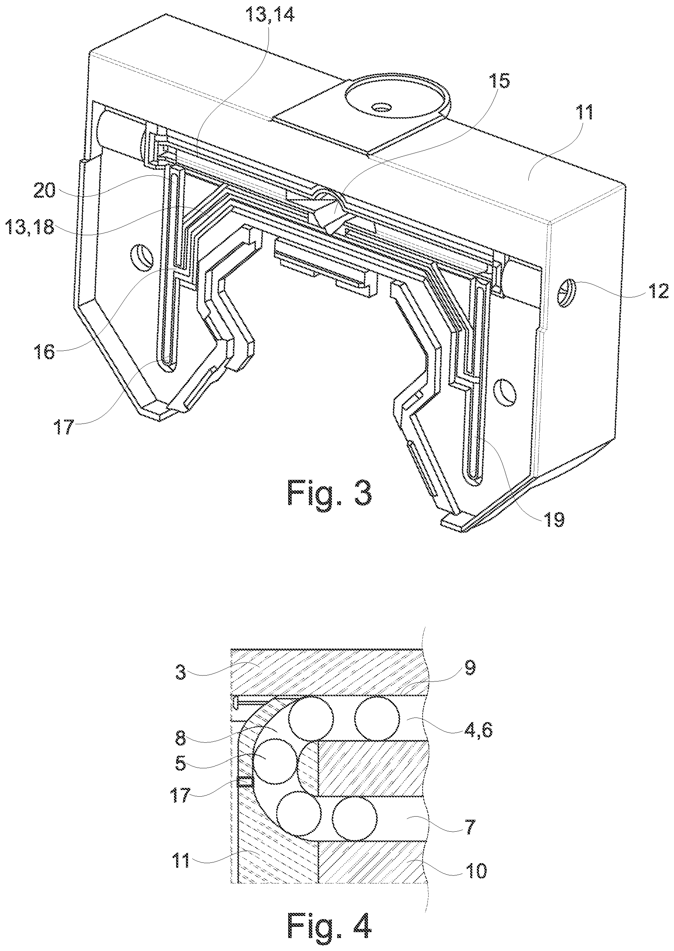

Der Führungswagen weist endlose Wälzkörperkanäle 4 auf. Figur 4 zeigt schematisch einen Ausschnitt des Wälzkörperkanals 4, in dem Wälzkörper 5 endlos umlaufen. Insgesamt vier endlose Wälzkörperkanäle 4 sind in diesem Ausführungsbeispiel eingerichtet, zwei zu beiden Seiten der Profilschiene. Jeder Wälzkörperkanal 4 weist einen Lastabschnitt 6, einen Rücklaufabschnitt 7 sowie den Lastabschnitt 6 mit dem Rücklaufabschnitt 7 endlos verbindende Umlenkabschnitte 8 auf. Die Lastabschnitte 6 weisen Laufbahnen 9 für die Wälzkörper 5 auf, die aneinander zugewandten Seiten der Schenkel 2 ausgebildet sind.

Der Führungswagen weist ferner einen Tragkörper 10 sowie an beiden Stirnseiten des Tragkörpers 10 angeordnete Kopfstücke 11 auf, von denen eines in der Figur 3 abgebildet ist. In den Kopfstücken 11 sind die Umlenkabschnitte 8 für die Wälzkörper 5 untergebracht (Figur 4).

Die Kopfstücke 11 weisen externe Schmierstoffanschlüsse 12 für die Zuführung von Schmierstoff in den Führungswagen auf. Die hier angedeuteten Schmierstoffanschlüsse 12 können mit einem Schmiernippel oder mit einem Schraubventil versehen sein.

Dieses Kopfstück 11 weist Schmierstoffkanäle 13 für den Schmierstoff auf, die an die Wälzkörperkanäle 4 zu deren Versorgung mit Schmierstoff angeschlossen sind. Es sind mehrere in Fließrichtung des Schmierstoffs hintereinander in Reihe geschaltete Ordnungen von Schmierstoffkanälen 13 vorgesehen. Jedem Schmierstoffkanal 13 einer höherrangigen Ordnung ist eine Mehrzahl von untereinander parallel geschalteten Schmierstoffkanälen 13 einer niederrangigen Ordnung von Schmierstoffkanälen 13 zugeordnet. Mehrere niederrangige Schmierstoffkanäle 13 sind parallel an den höherrangigen Schmierstoffkanal 13 angeschlossen, so dass der Schmierstoffstrom des höherrangigen Schmierstoffkanals 13 sich aufteilt auf die Anzahl der angeschlossenen niederrangigen Schmierstoffkanäle 13. Ein erster Schmierstoffkanal 14 ist der ordnungsmäßig ranghöchste Schmierstoffkanal 13 , der an den Schmierstoffanschluss 12 angeschlossen ist.

Die Summe der Fließquerschnitte dieser - an den höherrangigen Schmierstoffkanal 13 - angeschlossenen Schmierstoffkanäle 13 der niederrangigen Ordnung ist gleich groß wie der Fließquerschnitt des Schmierstoffkanals 13 der höherrangigen Ordnung. Die Fließquerschnitte der niederrangigen Ordnung sind innerhalb ihrer Ordnung vorzugsweise gleich groß. Die Fließgeschwindigkeiten des Schmierstoffs können auf diese Weise weitgehend konstant gehalten werden in allen Schmierstoffkanälen 13. Die Fließquerschnitte und die Anzahl der niederrangigen Schmierstoffkanäle 13 sind auf den Fließquerschnitt des angeschlossenen höherrangigen Schmierstoffkanals 13 abgestimmt.

Der erste Schmierstoffkanal 14 erstreckt sich von dem Schmierstoffanschluss 12 bis zu einem ersten Verteilerpunkt 15, an den Schmierstoffkanäle 13 zweiter Ordnung angeschlossen sind, die sich jeweils bis zu einem zweiten Verteilerpunkt 16 erstrecken, an den jeweils Schmierstoffkanäle 13 dritter Ordnung angeschlossen sind, die sich jeweils bis zu einem Übergabeabschnitt 17, 20 erstrecken, die den Schmierstoffkanal 13 dritter Ordnung mit einem der Wälzkörperkanäle 4 verbindet. Der Übergabeabschnitt 17 ist dem unteren Wälzkörperkanal 4 zugeordnet, der Übergabeabschnitt 20 ist dem oberen Wälzkörperkanal 4 zugeordnet.

Das Kopfstück 11 weist mehrere Schmierstoffanschlüsse 12 auf, die an den gemeinsamen ersten Schmierstoffkanal 13 anschließen und der sich quer zur Längsachse von einer Längsseite des Führungswagens zu der gegenüberliegenden Längsseite erstreckt und der an beiden Enden an je einen der Schmierstoffanschlüsse 12 angrenzt, wobei in diesem Fall mittig zwischen den beiden Schmierstoffanschlüssen 12 der erste Verteilerpunkt 15 angeordnet ist.

Zwei zweite Schmierstoffkanäle 18 zweiter Ordnung erstrecken sich ausgehend von dem ersten Verteilerpunkt 15 jeweils in einen der beiden Schenkel 2 des Führungswagens hinein bis zu dem zweiten Verteilerpunkt 16, an den jeweils zwei dritte Schmierstoffkanäle 19 dritter Ordnung anschließen.

Die beiden dritten Schmierstoffkanäle 19 erstrecken sich an beiden Schenkeln 2 ausgehend von dem zweiten Verteilerpunkt 16 entlang einer gemeinsamen Achse quer zu dem ersten Schmierstoffkanal 14 und enden jeweils an dem Übergabeabschnitt 17, 20 eines Wälzkörperkanals 4.

Die Fließquerschnitte innerhalb einer gemeinsamen Ordnung von Schmierstoffkanälen 13 sind konstant.

### Bezugszeichenliste

- 1: Rücken
- 2: Schenkel
- 3: Profilschiene
- 4: Wälzkörperkanal
- 5: Wälzkörper
- 6: Lastabschnitt
- 7: Rücklaufabschnitt
- 8: Umlenkabschnitt
- 9: Laufbahn
- 10: Tragkörper
- 11: Kopfstück
- 12: Schmierstoffanschluss
- 13: Schmierstoffkanal
- 14: erster Schmierstoffkanal
- 15: erster Verteilerpunkt
- 16: zweiter Verteilerpunkt
- 17: Übergabeabschnitt
- 18: zweiter Schmierstoffkanal
- 19: dritter Schmierstoffkanal
- 20: Übergabeabschnitt

## Patentansprüche

1. Führungswagen einer Linearführung, mit endlosen Wälzkörperkanälen (4), in denen Wälzkörper (5) endlos umlaufen, mit einem externen Schmierstoffanschluß (12) für die Zuführung von Schmierstoff, und mit Schmierstoffkanälen (13) für den Schmierstoff, die an die Wälzkörperkanäle (4) zu deren Versorgung mit Schmierstoff angeschlossen sind, wobei mehrere in Fließrichtung des Schmierstoffs hintereinander in Reihe geschaltete Ordnungen von Schmierstoffkanälen (13) vorgesehen sind, wobei jedem Schmierstoffkanal (13) einer höherrangigen Ordnung eine Mehrzahl von untereinander parallel geschalteten Schmierstoffkanälen (13) einer niederrangigen Ordnung von Schmierstoffkanälen (13) zugeordnet ist, **dadurch gekennzeichnet, dass** die Summe der Fließquerschnitte dieser Schmierstoffkanäle (13) der niederrangigen Ordnung gleich groß ist wie der Fließquerschnitt des Schmierstoffkanals (13) der höherrangigen Ordnung.

2. Führungswagen nach Anspruch 1, mit einem ersten Schmierstoffkanal (14) erster Ordnung, der sich von dem Schmierstoffanschluss (12) bis zu einem ersten Verteilerpunkt (15) erstreckt, an den zweite Schmierstoffkanäle (18) zweiter Ordnung angeschlossen sind, die sich jeweils bis zu einem zweiten Verteilerpunkt (16) erstrecken, an den jeweils dritte Schmierstoffkanäle (19) dritter Ordnung angeschlossen sind, die sich jeweils bis zu einem Übergabeabschnitt (20) erstrecken, die den dritten Schmierstoffkanal (19) dritter Ordnung mit einem der Wälzkörperkanäle (4) verbindet.

3. Führungswagen nach Anspruch 1 oder 2, mit einem Rücken (1) und mit zueinander parallel angeordneten Schenkeln (2) , die an beiden Längsseiten des Rückens (1) angeordnet sind, und mit einem Tragkörper (10) sowie mit an beiden Stirnseiten des Tragkörpers (10) angeordneten Kopfstücken (11), von denen wenigstens eines den Schmierstoffanschluss (12) und die Schmierstoffkanäle (13) aufweist, wobei jeder Wälzkörperkanal (4) einen Lastabschnitt (6), einen Rücklaufabschnitt (7) sowie den Lastabschnitt (6) mit dem Rücklaufabschnitt (7) endlos verbindende Umlenkabschnitte (8) aufweist, und wobei die Lastabschnitte (6) Laufbahnen (9) für die Wälzkörper (5) aufweisen.

4. Führungswagen nach einem der Ansprüche 1 bis 3, dessen Kopfstück (11) mehrere Schmierstoffanschlüsse (12) aufweist, die an den gemeinsamen ersten Schmierstoffkanal (14) der ersten Ordnung anschließen.

5. Führungswagen nach den Ansprüchen 3 und 4, dessen erster Schmierstoffkanal (14) der ersten Ordnung sich von einer Längsseite des Führungswagens zu der gegenüberliegenden Längsseite erstreckt und an beiden Enden an je einen der Schmierstoffanschlüsse (12) angeschlossen ist, wobei mittig zwischen den beiden Schmierstoffanschlüssen (12) der erste Verteilerpunkt (15) angeordnet ist.

6. Führungswagen nach Anspruch 5, der zweite Schmierstoffkanäle (18) zweiter Ordnung aufweist, die sich ausgehend von dem ersten Verteilerpunkt (15) jeweils in einen der beiden Schenkel (2) des Führungswagens hinein erstrecken bis zu einem zweiten Verteilerpunkt (16), an den jeweils zwei dritte Schmierstoffkanäle (19) dritter Ordnung anschließen.

7. Führungswagen nach Anspruch 6, dessen beide dritten Schmierstoffkanäle (19) dritter Ordnung entlang einer gemeinsamen Achse quer zu dem ersten Schmierstoffkanal (14) erster Ordnung angeordnet sind und die jeweils an einem Übergabeabschnitt (17) eines Wälzkörperkanals (4) enden.

8. Führungswagen nach einem der Ansprüche 1 bis 6, dessen Fließquerschnitte innerhalb einer Ordnung von Schmierstoffkanälen (13) jeweils konstant sind.

## Claims

1. A carriage of a linear bearing, with endless rolling element channels (4) in which rolling elements (5) circulate endlessly, having an external lubricant connection (12) for supplying lubricant, and having lubricant channels (13) for the lubricant, which are connected to the rolling element channels (4) for supplying them with lubricant, wherein multiple orders of lubricant channels (13) connected in series in the flow direction of the lubricant are provided, wherein each lubricant channel (13) of a higher order is assigned a plurality of lubricant channels (13) of a lower order of lubricant channels (13) connected in parallel among one another, **characterized in that** the sum of the flow cross-sections of these lubricant channels (13) of the lower order is equal to the flow cross-section of the lubricant channel (13) of the higher order.

2. The carriage according to claim 1, having a first lubricant channel (14) of the first order, which extends from the lubricant connection (12) to a first distribution point (15) to which second lubricant channels (18) of the second order are connected, which extend in each case to a second distribution point (16) to which third lubricant channels (19) of the third order are connected, which extend in each case to a transfer section (20) which connects the third lubricant channel (19) of the third order to one of the rolling element channels (4).

3. The carriage according to claim 1 or 2, having a rear (1) and having legs (2) arranged parallel to one another, which are arranged on both longitudinal sides of the rear (1), and having a supporting body (10) and having head pieces (11) arranged on both end faces of the supporting body (10), at least one of which has the lubricant connection (12) and the lubricant channels (13), wherein each rolling element channel (4) has a load section (6), a return section (7) and deflection sections (8) endlessly connecting the load section (6) to the return section (7), and wherein the load sections (6) have raceways (9) for the rolling elements (5).

4. The carriage according to any one of claims 1 to 3, the head piece (11) of which has multiple lubricant connections (12) which connect to the common first lubricant channel (14) of the first order.

5. The carriage according to claims 3 and 4, the first lubricant channel (14) of the first order of which extends from one longitudinal side of the carriage to the opposite longitudinal side and is connected at both ends to one of the lubricant connections (12) in each case, wherein the first distribution point (15) is arranged centrally between the two lubricant connections (12).

6. The carriage according to claim 5, which has lubricant channels (18) of the second order which extend from the first distribution point (15) into one of the two legs (2) of the carriage in each case up to a second distribution point (16), to which two third lubricant channels (19) of the third order are connected in each case.

7. The carriage according to claim 6, wherein both third lubricant channels (19) of the third order are arranged along a common axis transverse to the first lubricant channel (14) of the first order and each end at a transfer section (17) of a rolling element channel (4).

8. The carriage according to any one of claims 1 to 6, the flow cross-sections of which are constant within an order of lubricant channels (13) in each case.

## Revendications

1. Chariot de guidage linéaire, comportant des canaux d'éléments roulants sans fin (4), dans lesquels des éléments roulants (5) circulent sans fin, comportant un raccord de lubrifiant externe (12) pour l'amenée de lubrifiant, et comportant des canaux de lubrifiant (13) pour le lubrifiant, qui sont raccordés aux canaux d'éléments roulants (4) pour leur alimentation en lubrifiant, dans lequel plusieurs ordres de canaux de lubrifiant (13) sont prévus, raccordés en série les uns derrière les autres dans le sens d'écoulement du lubrifiant, dans lequel à chaque canal de lubrifiant (13) d'un ordre de rang supérieur est attribuée une pluralité de canaux de lubrifiant (13) raccordés en parallèle les uns aux autres d'un ordre de rang inférieur de canaux de lubrifiant (13), **caractérisé en ce que** la somme des sections transversales d'écoulement de ces canaux de lubrifiant (13) d'ordre de rang inférieur est égale à la section transversale d'écoulement du canal de lubrifiant (13) d'ordre de rang supérieur.

2. Chariot de guidage selon la revendication 1, comportant un premier canal de lubrifiant (14) de premier ordre, qui s'étend depuis le raccord de lubrifiant (12) jusqu'à un premier point de distribution (15), auquel sont raccordés des deuxièmes canaux de lubrifiant (18) de deuxième ordre, chacun s'étendant jusqu'à un deuxième point de distribution (16), auquel sont raccordés des troisièmes canaux de lubrifiant (19) de troisième ordre, chacun s'étendant jusqu'à une section de transfert (20) qui relie le troisième canal de lubrifiant (19) de troisième ordre à l'un des canaux d'éléments roulants (4).

3. Chariot de guidage selon la revendication 1 ou 2, comportant un dos (1) et des branches (2) agencées parallèlement les unes aux autres, qui sont agencées sur les deux côtés longitudinaux du dos (1), et comportant un corps de support (10) et des pièces de tête (11) agencées sur les deux faces frontales du corps de support (10), dont au moins une pièce présente le raccord de lubrifiant (12) et les canaux de lubrifiant (13), dans lequel chaque canal d'éléments roulants (4) présente une section de charge (6), une section de retour (7) et des sections de déviation (8) reliant sans fin la section de charge (6) à la section de retour (7), et dans lequel les sections de charge (6) présentant des chemins de roulement (9) pour les éléments roulants (5).

4. Chariot de guidage selon l'une des revendications 1 à 3, dont la pièce de tête (11) présente une pluralité de raccords de lubrifiant (12) qui se raccordent au premier canal de lubrifiant (14) commun du premier ordre.

5. Chariot de guidage selon les revendications 3 et 4, dont le premier canal de lubrifiant (14) du premier ordre s'étend d'un côté longitudinal du chariot de guidage au côté longitudinal opposé et étant raccordé aux deux extrémités à l'un des raccords de lubrifiant (12), dans lequel le premier point de distribution (15) est agencé au centre entre les deux raccords de lubrifiant (12).

6. Chariot de guidage selon la revendication 5, qui présente des deuxièmes canaux de lubrifiant (18) de deuxième ordre, qui s'étendent du premier point de distribution (15) respectivement dans l'une des deux branches (2) du chariot de guidage jusqu'à un deuxième point de distribution (16), auquel sont raccordés deux troisièmes canaux de lubrifiant (19) de troisième ordre.

7. Chariot de guidage selon la revendication 6, dont les deux troisièmes canaux de lubrifiant (19) de troisième ordre sont agencés le long d'un axe commun transversalement au premier canal de lubrifiant (14) de premier ordre et se terminent respectivement au niveau d'une section de transfert (17) d'un canal d'élément roulant (4).

8. Chariot de guidage selon l'une des revendications 1 à 6, dont les sections transversales d'écoulement sont respectivement constantes à l'intérieur d'un ordre de canaux de lubrifiant (13).
